# EUROPEAN PATENT APPLICATION

(11) **EP 1 950 967 A1**
(43) Date of publication of application: **30.07.2008**
(21) Application number: 06790985.3
(22) Date of filing: 13.09.2006
(51) Int. Cl.: H04N 7/173

(54) **EPG, STREAMING MEDIA SCHEDULING AND DEMANDING SYSTEM, METHOD AND APPARATUS**

(30) Priority: 01.11.2005 CN 200510100983
(71) Applicant: Huawei Technologies Co., Ltd., Longgang District Shenzhen 518129 (CN)
(72) Inventor: XIONG, Anyuan, Shenzhen Guangdong 518129 (CN)
(74) Representative: Manitz, Finsterwald & Partner GbR
(86) International application number: PCT/CN2006/002382
(87) International publication number: WO 2007/051385

(57) **Abstract**

A method of streaming media, includes: a digital terminal visits an Electronic Program Guide (EPG) server, the EPG server obtains the capability parameters of the digital terminal and a streaming media program list that matches the capability parameters of the digital terminal, and the EPG server sends the streaming media program list to the digital terminal so that a user may choose a program; after the program is chosen by the user, the digital terminal initiates a redirecting request to the request redirector; after receiving the redirecting request, the request redirector obtains the capability parameters of the digital terminal and selects a matching streaming media server to serve the digital terminal according to the capability parameters of the digital terminal and the program chosen by the user. The present invention also provides a streaming media on-demand system, including an EPG system, a redirector.

## Description

### Field of the Technology

The present invention relates to streaming media services, and more particularly, to a system and method of electronic program guide, a system and method for redirecting streaming media and a system and method of streaming media on-demand , and also to an electronic program guide server, a digital terminal and a request redirector

### Background of the Invention

A feature of the streaming media service is playing streaming media files while downloading them. Compared with a simple download method, the streaming media service largely reduces start-up time lag and requires less buffer capacity on digital terminals such as a set-top box (STB). In comparison with conventional analog television, streaming media system greatly increases the streaming media playing quality and provides professional, diversified and customized programs for specific groups of audience who may choose video or audio programs according to their own interests and enjoy varieties of interactive services.

However, in the current streaming media on-demand system, e.g., in a Content Delivery Network (CDN) or a streaming media service system, the whole system adopts only one format of streaming media file with the same resolution and an Electronic Program Guide (EPG) server provides a digital terminal with a program list presenting only one format of streaming media file with the same resolution and bit rate; the request redirector serves only the digital terminals that have the same capability in order to redirect streaming media servers that support streaming media files of the same format, resolution and bit rate. Therefore digital terminals that support different streaming media formats and decoding capabilities cannot be installed in the same network; moreover, current streaming media service system does not support smooth upgrading of digital terminals that support different streaming media formats and decoding capabilities.

### Summary of the Invention

A system and method of Electronic Program Guide (EPG), a system and method for redirecting streaming media and a system and method of streaming media on-demand, and also an EPG server, a digital terminal and a request redirector are provided to realize mixed networking of digital terminals that support different streaming media formats and decoding capabilities.

A method for implementing an Electronic Program Guide (EPG), including:
an EPG server obtains capability parameters of a digital terminal, obtains a matching streaming media program list according to the capability parameters of the digital terminal, and sends the obtained streaming media program list to the digital terminal so that a user can choose a program.

The EPG server obtains the capability parameters of the digital terminal through the capability parameters reported by the digital terminal or by searching a digital terminal capability database.

The EPG server includes a streaming media program database corresponding to streaming media files saved in a streaming media server and the streaming media program database includes at least the names of the streaming media programs and the capability parameters of corresponding digital terminals; and
the EPG server searches the streaming media program database according to the capability parameters of the digital terminal to obtain the streaming media program list.

The capability parameters of the digital terminal include at least one of a streaming media format, a resolution and the maximum bit rate supported by the digital terminal.

A streaming media redirecting method, including:
a request redirector obtains capability parameters of a digital terminal, and selects a matching streaming media server to serve the digital terminal according to the capability parameters of the digital terminal and a program chosen by a user.

The request redirector obtains the capability parameters of the digital terminal through the capability parameters reported by the digital terminal or by searching a digital terminal capability database.

The capability parameters of the digital terminal include at least one of a streaming media format, a resolution and the maximum bit rate supported by the digital terminal.

The request redirector further selects a matching streaming media server according to the location of the digital terminal and the load of the streaming media server.

A method for providing streaming media on-demand, includes:
a digital terminal visits an Electronic Program Guide (EPG) server, and the EPG server obtains capability parameters of the digital terminal, obtains a matching streaming media program list according to the capability parameters of the digital terminal and sends the obtained streaming media program list to the digital terminal so that a user can choose a program;
the digital terminal initiates a redirecting request including the chosen program to a request redirector after the user chooses a program;
upon receiving the redirecting request, the request redirector selects a matching streaming media server to serve the digital terminal according to the program chosen by the user.

The EPG server obtains the capability parameters of the digital terminal through the capability parameters reported by the digital terminal or by searching a digital terminal capability database.

After the request redirector receives a redirecting request, the method further includes:
the request redirector obtains the capability parameters of the digital terminal, and selects a matching streaming media server to serve the digital terminal according to the obtained capability parameters.

The request redirector obtains the capability parameters of the digital terminal through the capability parameters reported by the digital terminal or by searching the digital terminal capability database.

An Electronic Program Guide (EPG) system, including an EPG server and a digital terminal; in which
the EPG server obtains a matching streaming media program list according to capability parameters of the digital terminal and transmits the obtained streaming media program list to the digital terminal;
the digital terminal receives the streaming media program list from the EPG server and presents the streaming media program list to a user.

The system further includes:
a digital terminal capability database saves the capability parameters reported by the digital terminal;
the EPG server searches the digital terminal capability database to obtain the capability parameters of the digital terminal.

The digital terminal reports its own capability parameters to the EPG server.

A system for redirecting streaming media, including a request redirector, a digital terminal and a streaming media server, in which
the request redirector obtains the capability parameters of the digital terminal and a program chosen by a user, based on which the request redirector selects a matching streaming media server and redirects the visit of the digital terminal to the selected streaming media server;
the digital terminal reports the program chosen by the user to the request redirector, receives the streaming media file data from the streaming media server according to the redirecting of the request redirector and plays the received file to the user on a display device.

The request redirector obtains the capability parameters of the digital terminal according to the capability parameters reported by the digital terminal; or the request redirector searches a digital terminal capability database further included in the system to obtain the capability parameters of the digital terminal.

A system of steaming media on-demand, includes an Electronic Program Guide (EPG) server, a digital terminal, a request redirector and a streaming media server, in which
the EPG server obtains a matching streaming media program list according to the obtained digital terminal capability parameters and transmits the obtained streaming media program list to the digital terminal;
the digital terminal receives the streaming media program list from the EPG server, presents the streaming media program list to a user for choosing, and reports the program chosen by the user to the request redirector;
the request redirector selects a matching streaming media server according to the program chosen by the user, which is reported by the digital terminal, and redirects the visit of the digital terminal to the selected streaming media server; and
the streaming media server provides streaming media file data for the digital terminal according to the redirecting of the request redirector.

The EPG server obtains the capability parameters of the digital terminal according to the capability parameters reported by the digital terminal; or the EPG server searches a digital terminal capability database further included in the system to obtain the capability parameters of the digital terminal.

The request redirector obtains the capability parameters of the digital terminal and selects the matching streaming media server according to the capability parameters and the program chosen by the user.

The request redirector obtains the capability parameters of the digital terminal according to the capability parameters reported by the digital terminal; or the request redirector searches a digital terminal capability database further included in the system to obtain the capability parameters of the digital terminal.

The digital terminal supports at least one of the formats including a Moving Pictures Experts Group-2 (MEPG-2), an H.264, an Advanced Video Standard (AVS) and an MEPG4; the digital terminal also supports at least one of the decoding rates comprising D1, 1/2 D1, High Definition (HD), and Standard Definition (SD); and the streaming media server supports the format and decoding rate supported by the digital terminal.

An Electronic Program Guide (EPG) server, including a streaming media program database and a terminal capability inquiry module, in which
the streaming media program database saves the streaming media programs which correspond to streaming media files saved in a streaming media server and saves capability parameters that need to be supported by the digital terminal;
the terminal capability inquiry module obtains the capability parameters of a digital terminal, searches the streaming media program database according to the capability parameters of the digital terminal to obtain a streaming media program list that matches the capability parameters of the digital terminal and sends the obtained streaming media program list to corresponding digital terminal.

The terminal capability inquiry module obtains the capability parameters of the digital terminal through the capability parameters reported initiatively by the digital terminal; or the terminal capability inquiry module sends a request to the digital terminal asking for the capability parameters of the digital terminal; or the terminal capability inquiry module searches a digital terminal capability database to obtain the capability parameters of the digital terminal. A digital terminal includes a capability report module and a communication module, in which
the capability report module reports capability parameters of the digital terminal to an Electronic Program Guide, EPG, server and / or a request redirector through the communication module.

The digital terminal is a set-top box.

A request redirector, includes a digital terminal capability inquiry module and a streaming media server detection module, in which
the digital terminal capability inquiry module obtains capability parameters of a digital terminal and reports the obtained capability parameters to the streaming media server detection module;
the streaming media server detection module selects a streaming media server according to the capability parameters and redirects the visit of the digital terminal to the selected streaming media server.

The digital terminal capability inquiry module obtains the capability parameters of the digital terminal through a redirecting request from the digital terminal; or the digital terminal capability inquiry module sends a capability parameter inquiry request to the digital terminal to obtain the capability parameters of the digital terminal; or the digital terminal capability inquiry module searches a digital terminal capability database to obtain the capability parameters of the digital terminal.

Through the capability of interactive playing between the digital terminal and the EPG server / request redirector, the methods, systems and apparatuses provided by the embodiments of the present invention may realize mixed networking of digital terminals with different processing capabilities and smooth upgrading of digital terminals that support different formats and decoding capabilities.

### Brief Description of the Drawings

Figure 1 is a schematic diagram illustrating the structure of an EPG system in accordance with an embodiment of the present invention;
Figure 2 is a flow chart of the EPG method in accordance with an embodiment of the present invention;
Figure 3 is a schematic diagram illustrating the structure of a streaming media redirecting system in accordance with an embodiment of the present invention;
Figure 4 is a flow chart of the method for redirecting streaming media in accordance with an embodiment of the present invention;
Figure 5 is a schematic diagram illustrating the structure of a streaming media on-demand system in accordance with an embodiment of the present invention;
Figure 6 is a schematic diagram illustrating the structure of a streaming media on-demand system in accordance with another embodiment of the present invention;
Figure 7 is a flow chart of the method to provide streaming media on-demand in accordance with an embodiment of the present invention.

### Detailed description of the Invention

The invention is hereinafter described in detail with reference to the embodiments and the accompanying drawings to further clarify the objectives, technical scheme and advantages of this invention.

In the EPG method and system provided by an embodiment of the present invention, the EPG server obtains, according to the capability parameters of the digital terminal, a streaming media program list that matches the capability parameters and transmits the obtained streaming media program list to the digital terminal, so that the EPG server can present the streaming media program list supported by the digital terminal to a user through the digital terminal to enable the user to choose a program.

The capability parameters of the digital terminal may be reported by the digital terminal initiatively to the EPG server, or obtained by the EPG server through sending a request to the digital terminal, or obtained by the EPG server through searching the digital terminal capability database on the network side; the capability parameters of the digital terminal can include the streaming media file format supported by the digital terminal, the resolution and / or bit rate supported by the digital terminal. The digital terminal capability parameters saved in the digital terminal capability database may be directly reported by the digital terminal, or saved by the EPG server.

A streaming media program database can be set up in the EPG server to save the information of the streaming media files saved in all the streaming media servers, including the programs and the formats of the streaming media files, or further including the resolutions and / or bit rates of the files, etc; the EPG server searches the streaming media program database according to the capability parameters of the digital terminal to obtain the streaming media program list that matches the streaming media file formats and further the resolution and / or bit rate supported by the digital terminal, and then the EPG server transmits the streaming media program list to the digital terminal. The streaming media program list transmitted to the digital terminal can be presented to the user in the form of webpage and every streaming media file can be shown in a Universal Resource Locator (URL) form in the webpage.

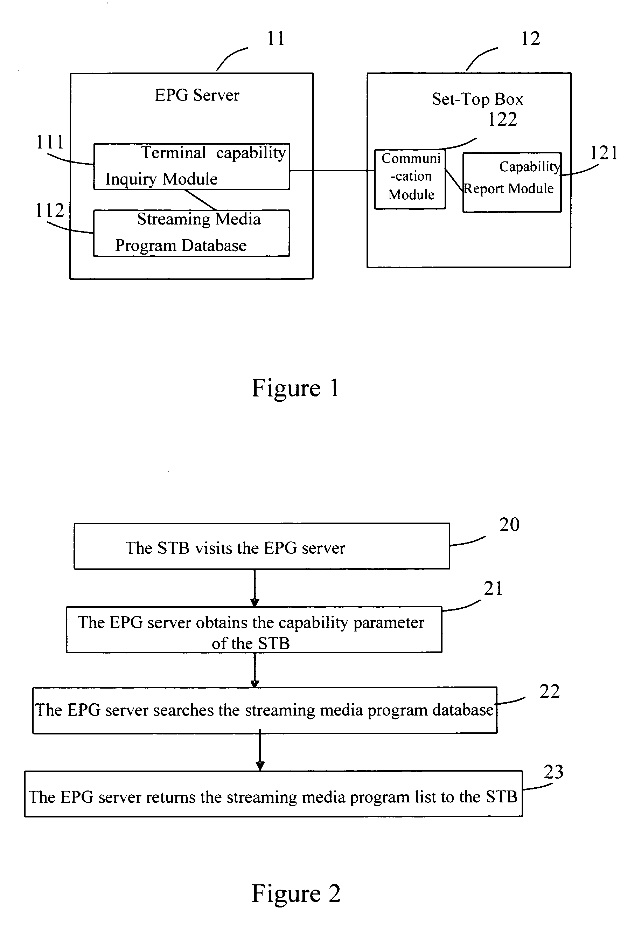

Provided the digital terminal is an STB, Figure 1 shows an embodiment of the EPG system including an EPG server 11 and an STB 12. Where, the EPG server 11 includes a streaming media program database 112 and a terminal capability inquiry module 111; the STB 12 includes a capability report module 121 and a communication module 122.

The EPG server 11 is used for obtaining, according to the capability parameters of the STB 12, a streaming media program list that matches the capability parameters and transmitting the streaming media program list obtained to the STB 12.

The streaming media program database 112 is used for saving the streaming media programs that correspond to the streaming media files saved in the streaming media server and the capability parameters that need to be supported by the STB, including one or any combination of the streaming media file format, the resolution and / or the bit rate, etc.

The terminal capability inquiry module 111 is used for obtaining the streaming media programs list that matches the capability parameters of the STB 12 through searching the streaming media program database 112 according to the obtained capability parameters of the STB 12, e.g., obtaining the streaming media programs list in a Moving Pictures Experts Group-2 (MPEG-2) format or in an H.264 format, and sending the streaming media program list obtained to corresponding STB 24 in the form of webpage or the like to be displayed by STB 12 on a display equipment for the user to choose.

The terminal capability inquiry module 111 may obtain the capability parameters of the STB 12 through the capability parameters reported initiatively by the capability report module 121 in the STB 12; or it may send a request to the STB 12 and obtain the capability parameters of the STB 12 through the capability parameters reported by the capability report module 121 in response to the request; or it may obtain the capability parameters of the STB 12 from the STB capability database in the inquiry system.

The STB 12 is used for reporting its own capability parameters to the EPG server 11, receiving the streaming media program list from the EPG server 11 and presenting the streaming media program list to the user on a display equipment so that the user may choose a program.

The capability report module 121 in the STB 12 is used for reporting the capability parameters of the STB 12, including one or any combination of the supported streaming media file format, resolution and / or bit rate, to the EPG server 11 through the communication module 122; the capability report module 121 may send the capability parameters to the EPG server 11 through attaching the capability parameters to the play request sent by the communication module 122 to the EPG server 11, it may also report the capability parameters to the EPG server 11 through the communication module 122 after the communication module 122 receives the request from the EGP server 11 about the capability parameters of the STB 12.

Provided that the digital terminal is an STB, Figure 2 shows the workflow of the EPG method in accordance with an embodiment of the present invention, including:
Firstly Step 20, in which the user visits the EPG server through the STB;
Step 21, in which the EPG server obtains the capability parameters of the STB.

When the user visits the EPG server through the STB, the capability parameters of the STB may be carried by the visit request, from which the EPG server obtains the capability parameters of the STB.

The visit request may also be sent without the capability parameters of the STB when the user visits the EPG server through the STB. In such case, the EPG server may send a capability parameter inquiry request to the STB in this step after receiving the visit request, and the STB will report its own capability parameters in a capability parameter inquiry response to the EPG server; the EPG server may also searches the digital terminal capability database according to the STB identifier (STB ID) in the visit request: if the digital terminal capability database includes the capability parameters of the STB, the EPG server obtains the parameter; otherwise the EPG server sends the capability parameters inquiry request to the STB and saves the capability parameters of the STB in the digital terminal capability database after receiving the capability parameters reported by the STB. The digital terminal capability database can be set up in the EPG server or installed independently.

Then in Step 22, the EPG server searches the streaming media program database according to the capability parameters of the STB and obtains the streaming media program list that matches the capability parameters of the STB.

The streaming media program database saves the streaming media programs saved in each streaming media server in the streaming media on-demand system and their corresponding formats or further saves the corresponding resolutions and / or bit rates; the EPG server searches for a matching streaming media program according to the capability parameters of the digital terminal. For instance, when the capability parameters of the digital terminal indicate that the H.264 format is supported, the EPG server searches for streaming media program data and obtains a list of all the streaming media programs in H.264 format; when the capability parameters of the digital terminal indicates that the H.264 format with resolution 1/2 is supported, the EPG server searches for streaming media program data and obtains a list of all the streaming media programs in H.264 format with resolution 1/2.

In Step 23, the EPG server sends the streaming media program list obtained to the STB which displays the list on a display equipment such as a television so that the user can choose a program. The list can be displayed in the form of webpage or the like, and the streaming media programs can be displayed as the URLs in a webpage or the like.

In the method and system provided by the embodiments of the present invention for redirecting streaming media, the request redirector selects a matching streaming media server to serve the digital terminal according to the capability parameters of the digital terminal and the program chosen by the user.

The capability parameters of the digital terminal may be reported by the digital terminal initiatively when the digital terminal initiates a redirecting request to the request redirector, or be obtained by the request redirector from the digital terminal through a request after the request redirector receives a redirecting request without the capability parameters from the digital terminal, or be obtained by the request redirector from the digital terminal capability database on the network side, or be obtained by the request redirector from the digital terminal through a request when the request redirector fails to obtain the capability parameters from the digital terminal capability database. The digital terminal capability parameters saved in the digital terminal capability database are from the direct report by the digital terminal, or saved by the request redirector or other devices after obtaining the capability parameters of the digital terminal. The capability parameters of the digital terminal indicate one or any combination of the streaming media file format supported by the digital terminal, the resolution and / or bit rate supported by the digital terminal.

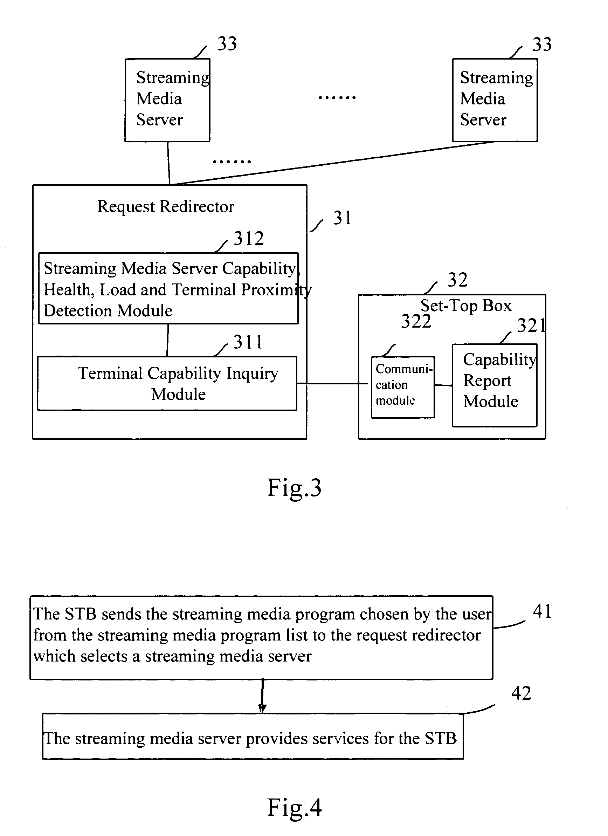

Provided that the digital terminal is an STB, Figure 3 shows a streaming media redirecting system in accordance with an embodiment of the present invention, including a request redirector 31, an STB 32 and multiple streaming media servers 33. Where, the request redirector 31 includes a terminal capability inquiry module 311 and a streaming media server capability, health, load and proximity detection module 312, in other words, a streaming media server detection module; the STB 32 includes a capability report module 321 and a communication module 322; the multiple streaming media servers can support different streaming media formats and decoding capabilities, such as an H.264 D1 server, an H.164 1/2 D1 server, an MPEG-2 server, an MPEG-4 server, an AVS server, a high definition (HD) server and a standard definition (SD) server.

The request redirector 31 is used for selecting a matching streaming media server to serve the STB 32 according to the capability parameters of the STB 32 and the program chosen by the user.

The terminal capability inquiry module 311 is used for obtaining the STB capability parameters attached to the redirecting request reported by the STB 32, or sending a capability parameter inquiry request to the STB 32 to obtain the capability parameters of the STB 32, or searching the digital terminal capability database to obtain the capability parameters of the STB 32 and reporting the parameters obtained to the streaming media server capability, health, load and terminal proximity detection module 312;

The streaming media server capability, health, load and terminal proximity detection module 312 is used for selecting a streaming media server that supports the capability parameters of the STB 32 and provides the best service according to the capability parameters and the location of the STB 32, the capability parameters supported by the streaming media server, whether the content exists or not and load degree of the streaming media server to redirect the visit from the STB 32 to the selected streaming media server.

The STB 32 is used for reporting its own capability parameters and the program chosen by the user to the request redirector 31, receiving the streaming media file data from the streaming media server and presenting the file received on a display equipment to the user.

The capability report module 321 in the STB 32 is used for reporting the capability parameters of the STB 32, including one or any combination of the supported streaming media file formats, resolution and / or bit rate, to the request redirector 31 through the communication module 322; the capability report module 321 may report the capability parameters to the request redirector 31 through attaching the capability parameters to a redirecting request sent by the communication module 322 to the request redirector 31, it may also report the capability parameters to the request redirector 31 through the communication module 322 after the communication module 322 receives the request from the request redirector 31 about the capability parameters of the STB 32.

The streaming media server 33 is used for providing the streaming media file data for the STB 32 according to the redirecting of the request redirector 31.

Provided that the digital terminal is an STB, Figure 4 shows a workflow of the method for redirecting streaming media in accordance with an embodiment of the present invention, including:

In Step 41, the STB sends the streaming media program chosen by the user from the streaming media program list to the request redirector, which selects the most suitable streaming media server to serve the STB according to policies including the location of the STB, the capability parameters supported by the streaming media server, whether the content exists or not and load degree of the streaming media server.

When the STB sends the chosen streaming media program to the request redirector, it may send the capability parameters of the STB as well so that the request redirector can obtain the capability parameters of the STB directly; the STB may send the chosen streaming media program to the request redirector without capability parameters of the STB, and in such case, the request redirector searches the digital terminal capability database according to the STB ID to obtain the capability parameters of the STB, or the request redirector sends a capability parameter inquiry request to the STB, and the STB reports its own capability parameters to the request redirector in a capability parameter inquiry response after receiving the capability parameters inquiry request. Then the request redirector will choose the most suitable streaming media server according to the policies including the capability parameters of the STB, the chosen streaming media program, the location of the STB, the STB capability parameters supported by the streaming media server, whether the program content exists or not and load degree of the streaming media server, etc.

Then in Step 42, the visit from the user to the streaming media program through the STB is redirected to the streaming media server chosen in Step 41 which sends corresponding streaming media file data to the STB to serve the user, and the STB plays the corresponding streaming media file.

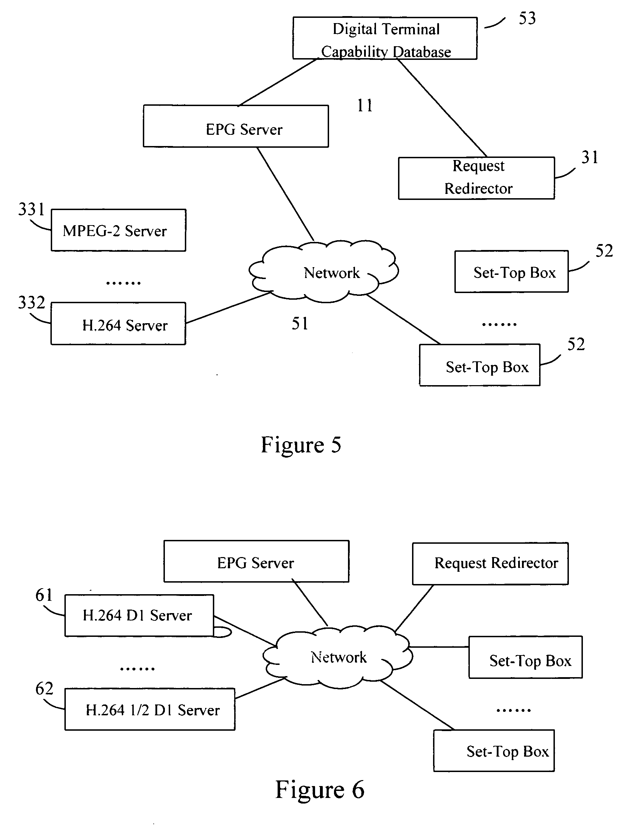

The EPG system and the streaming media redirecting system are included in the streaming media on-demand system provided by the embodiments of the present invention. Provided that the digital terminal is an STB, Figure 5 shows the structure of a streaming media on-demand system in accordance with an embodiment of the present invention. The streaming media on-demand system can be realized on the basis of the existing CDN or streaming media service system, it includes an EPG server 11, a request redirector 31, multiple STB 52s and multiple streaming media servers that the four kinds of devices mentioned above are connected to network 51 respectively. The streaming media servers shown in Figure 5 is an example including an MPEG-2 server 331 and an H.264 server 332, therefore the streaming media servers shown in Figure 5 support streaming media files in MPEG-2 format and H.264 format respectively. The EPG server 11, the request redirector 31, every STB 52 and every streaming media server in the system possesses a unique identity (such as the IP address) respectively, through which a streaming media transmission between the streaming media servers and the STBs is realized.

The network 51 is a network that supports streaming media transport protocols and even real-time transport protocols, such as a Real-Time Transport Protocol (RTP), a Real-time Transport Control Protocol (RTCP), a Real-Time Streaming Protocol (RTSP), etc.

The streaming media servers are used for saving and sending streaming media files to the STB 52, wherein the MPEG-2 server 331 is used for saving and sending streaming media files in MPEG-2 format to the STB 52 and the H.264 server 332 is used for saving and sending streaming media files in H.264 format to the STB 52.

Different STB possesses different capability parameters so that they can play streaming media files in different formats with different resolutions or bit rates from the streaming media servers respectively, such as the streaming media files in MPEG-2 format or H.264 format. Moreover, the STBs also interact with other devices involved in the EPG system and the streaming media redirecting system, and no further description is given here. The constitution of the EPG server and the request redirector and the interaction between them are similar to the above description of the two systems.

The streaming media on-demand system can further include a media distributor, which distributes the streaming media files in different format and with different resolutions or bit rates to different streaming media servers.

The streaming media on-demand system can further include a digital terminal capability database 53, which saves the relationship between the ID information of the STB 52 and the capability parameters of the STB.

The system provided by the embodiment of the present invention is described above with reference to the embodiment in which there are multiple streaming media servers including an MPEG-2 server 331 and an H.264 server 332. The streaming media servers in the embodiment shown in Figure 6 also include an H.264 D1 server 61, which supports the H.264 format with resolution D1, and an H.264 1 /2 D1 server 62, which supports the H.264 format with resolution 1/2 D1, therefore the system in the embodiment supports mixed networking with an STB that supports H.264 D1 and an STB that supports H.264 1/2 D1 so that the system can be upgraded smoothly from H.264 1/2 D1 to H.264 D1 to increase the efficiency of resources; similarly, a system can also be upgraded smoothly from MPEG-2 format to H.264 format.

The streaming media servers described above include: an MPEG-4 server that supports streaming media files in MPEG-4 format, an MPEG-2 server that supports streaming media files in MPEG-2 format, an H.264 server that supports streaming media files in H.264 format, an AVS server that supports streaming media files in AVS format, a server that supports any of the above format with resolution D1, 1/2 D1, HD or SD, or a server that supports two or more of the above formats with two or more of the above resolutions, etc., so that the system in the embodiment can realize mixed networking with any two or any combination of the above servers.

Naturally, the streaming media servers in the embodiment may include all the streaming media servers described above as well as the servers that will support other streaming media file formats in the future. Other mixed networking forms except the above ones will not be described any more.

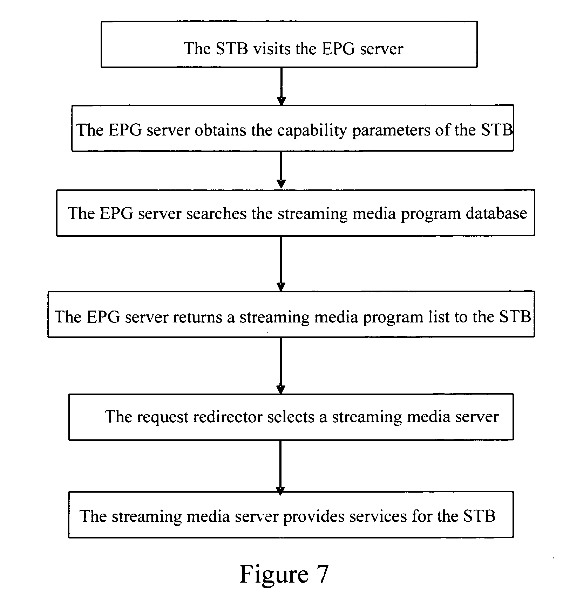

The streaming media on-demand system in accordance with the embodiments of the present invention is described in detail above with reference to the embodiments. The method in accordance with an embodiment of the present invention for streaming media on-demand is described below, the embodiment of which is shown in Figure 7 and the steps in which are described in the embodiments of the methods of the EPG and streaming media redirecting, and will not be described any more here.

Naturally, in the method of streaming media on-demand in accordance with an embodiment of the present invention, after an EPG server transmits to an STB a streaming media program list in the format supported by the STB, the request redirector may select a streaming media server to server the STB according to the program reported by the STB without obtaining the capability parameters of the STB.

An example is given here to illustrate the method for providing streaming media on-demand: supposing the STB supports streaming media files in MPEG-2 format with resolution 1080P, firstly the EPG server obtains through the network the STB capability parameters indicating the MPEG-2 format with resolution 1080P is supported, and searches the streaming media program database according to the STB capability parameters to obtain a list in which all streaming media programs in MPEG-2 format with resolution 1080P are included; the STB selects a streaming media file from the list before visiting the request redirector, which in turn selects the most suitable streaming media server, e.g., an MPEG-2 server, to serve the STB according to policies including location of the STB, STB capability parameters supported by the streaming media server, whether the content exists or not and the load degree of the streaming media server.

The foregoing descriptions are only preferred embodiments of this invention, and are not used for limiting the invention. Any modification, equivalent replacement or improvement made under the spirit and principles of this invention should be covered within the protection scope of this invention.

## Claims

1. A method for implementing an Electronic Program Guide, EPG, comprising:
an EPG server obtaining capability parameters of a digital terminal, obtaining a matching streaming media program list according to the capability parameters of the digital terminal, and sending the obtained streaming media program list to the digital terminal so that a user can choose a program.

2. The method according to Claim 1, wherein the EPG server obtains the capability parameters of the digital terminal through the capability parameters reported by the digital terminal or by searching a digital terminal capability database.

3. The method according to Claim 1, wherein the EPG server comprises a streaming media program database corresponding to streaming media files saved in a streaming media server and the streaming media program database comprises at least the names of the streaming media programs and the capability parameters of corresponding digital terminals; and
the EPG server searches the streaming media program database according to the capability parameters of the digital terminal to obtain the streaming media program list.

4. The method according to any one of Claims 1 to 3, wherein the capability parameters of the digital terminal comprise at least one of a streaming media format, a resolution and the maximum bit rate supported by the digital terminal.

5. A streaming media redirecting method, comprising:
a request redirector obtaining capability parameters of a digital terminal, and selecting a matching streaming media server to serve the digital terminal according to the capability parameters of the digital terminal and a program chosen by a user.

6. The method according to Claim 5, wherein the request redirector obtains the capability parameters of the digital terminal through the capability parameters reported by the digital terminal or by searching a digital terminal capability database.

7. The method according to Claim 5, wherein the capability parameters of the digital terminal comprise at least one of a streaming media format, a resolution and the maximum bit rate supported by the digital terminal.

8. The method according to any one of Claims 5 to 7, wherein the request redirector further selects a matching streaming media server according to the location of the digital terminal and the load of the streaming media server.

9. A method for providing streaming media on-demand, comprising:
a digital terminal visiting an Electronic Program Guide, EPG, server, and the EPG server obtaining capability parameters of the digital terminal, obtaining a matching streaming media program list according to the capability parameters of the digital terminal and sending the obtained streaming media program list to the digital terminal so that a user can choose a program;
the digital terminal initiating a redirecting request comprising the chosen program to a request redirector after the user chooses a program;
upon receiving the redirecting request, the request redirector selecting a matching streaming media server to serve the digital terminal according to the program chosen by the user.

10. The method according to Claim 9, wherein the EPG server obtains the capability parameters of the digital terminal through the capability parameters reported by the digital terminal or by searching a digital terminal capability database.

11. The method according to Claim 9, after the request redirector receives a redirecting request, further comprising:
the request redirector obtaining the capability parameters of the digital terminal, and selecting a matching streaming media server to serve the digital terminal according to the obtained capability parameters.

12. The method according to Claim 11, wherein the request redirector obtains the capability parameters of the digital terminal through the capability parameters reported by the digital terminal or by searching the digital terminal capability database.

13. An Electronic Program Guide, EPG, system, comprising an EPG server and a digital terminal; wherein
the EPG server obtains a matching streaming media program list according to capability parameters of the digital terminal and transmits the obtained streaming media program list to the digital terminal;
the digital terminal receives the streaming media program list from the EPG server and presents the streaming media program list to a user.

14. The system according to Claim 13, further comprising
a digital terminal capability database saving the capability parameters reported by the digital terminal;
the EPG server searching the digital terminal capability database to obtain the capability parameters of the digital terminal.

15. The system according to Claim 13. wherein the digital terminal reports its own capability parameters to the EPG server.

16. A system for redirecting streaming media, comprising a request redirector, a digital terminal and a streaming media server, wherein
the request redirector obtains the capability parameters of the digital terminal and a program chosen by a user, based on which the request redirector selects a matching streaming media server and redirects the visit of the digital terminal to the selected streaming media server;
the digital terminal reports the program chosen by the user to the request redirector, receives the streaming media file data from the streaming media server according to the redirecting of the request redirector and plays the received file to the user on a display device.

17. The system according to Claim 16, wherein the request redirector obtains the capability parameters of the digital terminal according to the capability parameters reported by the digital terminal; or the request redirector searches a digital terminal capability database further comprised in the system to obtain the capability parameters of the digital terminal.

18. A system of steaming media on-demand, comprises an Electronic Program Guide, EPG, server, a digital terminal, a request redirector and a streaming media server, wherein
the EPG server obtains a matching streaming media program list according to the obtained digital terminal capability parameters and transmits the obtained streaming media program list to the digital terminal;
the digital terminal receives the streaming media program list from the EPG server, presents the streaming media program list to a user for choosing, and reports the program chosen by the user to the request redirector;
the request redirector selects a matching streaming media server according to the program chosen by the user, which is reported by the digital terminal, and redirects the visit of the digital terminal to the selected streaming media server; and
the streaming media server provides streaming media file data for the digital terminal according to the redirecting of the request redirector.

19. The system according to Claim 18, wherein the EPG server obtains the capability parameters of the digital terminal according to the capability parameters reported by the digital terminal; or the EPG server searches a digital terminal capability database further comprised in the system to obtain the capability parameters of the digital terminal.

20. The system according to Claim 18, wherein the request redirector obtains the capability parameters of the digital terminal and selects the matching streaming media server according to the capability parameters and the program chosen by the user.

21. The system according to Claim 20, wherein the request redirector obtains the capability parameters of the digital terminal according to the capability parameters reported by the digital terminal; or the request redirector searches a digital terminal capability database further comprised in the system to obtain the capability parameters of the digital terminal.

22. The system according to Claim 18, wherein the digital terminal supports at least one of the formats comprising a Moving Pictures Experts Group-2, MEPG-2, an H.264, an Advanced Video Standard, AVS, and an MEPG4; the digital terminal also supports at least one of the decoding rates comprising D1, 1/2 D1, High Definition, HD, and Standard Definition, SD; and the streaming media server supports the format and decoding rate supported by the digital terminal.

23. An Electronic Program Guide, EPG, server, comprising a streaming media program database and a terminal capability inquiry module, wherein
the streaming media program database saves the streaming media programs which correspond to streaming media files saved in a streaming media server and saves capability parameters that need to be supported by the digital terminal;
the terminal capability inquiry module obtains the capability parameters of a digital terminal, searches the streaming media program database according to the capability parameters of the digital terminal to obtain a streaming media program list that matches the capability parameters of the digital terminal and sends the obtained streaming media program list to corresponding digital terminal.

24. The EPG server according to Claim 23, wherein the terminal capability inquiry module obtains the capability parameters of the digital terminal through the capability parameters reported initiatively by the digital terminal; or the terminal capability inquiry module sends a request to the digital terminal asking for the capability parameters of the digital terminal; or the terminal capability inquiry module searches a digital terminal capability database to obtain the capability parameters of the digital terminal.

25. A digital terminal, comprises a capability report module and a communication module, wherein
the capability report module reports capability parameters of the digital terminal to an Electronic Program Guide, EPG, server and / or a request redirector through the communication module.

26. The digital terminal according to Claim 25, wherein the digital terminal is a set-top box.

27. A request redirector, comprises a digital terminal capability inquiry module and a streaming media server detection module, wherein
the digital terminal capability inquiry module obtains capability parameters of a digital terminal and reports the obtained capability parameters to the streaming media server detection module;
the streaming media server detection module selects a streaming media server according to the capability parameters and redirects the visit of the digital terminal to the selected streaming media server.

28. The request redirector according to Claim 27, wherein the digital terminal capability inquiry module obtains the capability parameters of the digital terminal through a redirecting request from the digital terminal; or the digital terminal capability inquiry module sends a capability parameter inquiry request to the digital terminal to obtain the capability parameters of the digital terminal; or the digital terminal capability inquiry module searches a digital terminal capability database to obtain the capability parameters of the digital terminal.
